# EUROPEAN PATENT APPLICATION

(11) **EP 4 248 810 A1**
(43) Date of publication of application: **27.09.2023**
(21) Application number: 22162251.7
(22) Date of filing: 22.03.2022
(51) Int. Cl.: A47J 37/04, A47J 37/10

(54) **BASTING LIQUID RECIRCULATION MODULE FOR A VERTICAL ROTISSERIE UNIT**

(71) Applicant: Vandamme, Paul, 030772 Bucharest (RO)
(72) Inventor: Vandamme, Paul, 030772 Bucuresti. (RO)
(74) Representative: Turcanu, Constantin

(57) **Abstract**

The invention refers to a basting liquid recirculation module (100) for an adopted vertical rotisserie unit (200), making together a vertical rotisserie machine, said rotisserie unit (200) having the upper part, above the highest spike with products to be roasted, equipped with a liquid distributor (7) and the bottom part, beneath the lowest spike with products to be roasted, equipped with a removable liquid collector (9) for collecting the liquid falling from the roasted products, the liquid recirculation module (100) comprising means of transporting the liquid from a liquid reservoir (5), located in a drawer (68), connected to collector (9) to a liquid recipient (10, 30') connected to liquid distributor (7), said means of transporting using a peristaltic pump (6). The liquid recirculation module (100) is provided with a command and control system implemented by a human-machine interface with touch screen (63) located on a front door panel (156), it operates in normal operation and in washing mode said system ensuring the working conditions in both modes.

## Description

The invention refers to a basting liquid recirculation/ recirculating module for an adopted vertical rotisserie unit with which it forms a vertical rotisserie machine using a flavouring liquid and tenderizing / dripping of a liquid on grilling products, such as simple vegetable comestible oil or oil flavoured with powder made of milled flavouring herbs for increasing the taste of meat and/or vegetables during the products cooking process (roasting or baking). The vertical rotisserie machine having a basting liquid recirculation module according to invention is intended for being used in food industry especially within the catering field, as kitchen equipment.

It is known from US 7 001 627 B2 from 21.02.2006, Louis A. Marson, a rotisserie oven comprising a central heating section having a vertical orientation and dividing the cooking space into two equal, independent, and evenly heated roasting chamber; at least two rotisserie roads each driven by a motor; at least two removable basting troughs positioned above the rotisserie roads; at least two drip collection pans positioned below the rotisserie rods; an ash drawer positioned below the central heating section; and a control panel. By inserting a basting liquid in the basting trough, the roasting meat is automatically basted with the dripping basting liquid. The excess basting liquid and the meat juices is collected in a drip cup and can easily be recycled during the roasting process. In one embodiment, a pump can be installed outside of the drip cup for automated recycling of the liquid into the basting through. By providing parts that are removable and have a simple mechanical design, cleaning and maintenance can be kept at minimum. Mounting the rotisserie oven on top of a cabinet results in added convenience, accessibility, and flexibility. The simple design of the blasting trough as well as the filtering of the liquid at the drip screen before collecting it in the drip cup provides a non-clogging basting system.

The description does not present an embodiment of this variant of invention using a pump for recirculating the basting liquid. Additionally, the recirculation of the basting liquid using a pump, in general, according to suggestions of this invention, involves the fulfilment of some special requirements, taking into consideration the characteristics of this liquid (for example, viscosity and composition). Moreover, the passing of the basting liquid through the pump body, involves the execution of some special pumps, made of materials permitted in food industry and hygiene conditions; the same, as regards the liquid pumping circuit. These aspects are not approached within above-mentioned invention.

Because of their design/construction, the pumps, in general, are difficult to maintain by unspecialized staff, as the pumped liquid gets into contact with the inner parts of the pump and vice-versa, contaminating the pump and the liquid, making harder the pump maintenance.

It is also known from EP application no. 19000112.3 on 05.03.2019 an invention relates to a vertical rotisserie apparatus/machine with liquid pouring for basting, comprising an improved rotisserie unit equipped with means for pouring of a basting/ aromatizing liquid, and a liquid recirculation module attached to the left or the right side of the rotisserie unit.

The vertical rotisserie machine according to this invention, has in general a parallelepiped shape having a support base mounted on wheels, being equipped with several horizontal spikes or baskets, vertically staggered, for fixing the foodstuff to be roasted, each spike being driven in rotational motion, being closed with two glass doors;
a liquid distributor having some liquid draining orifices in the bottom part, located above the first spike, distributing the liquid along the entire length of the spikes;
a liquid collector, located beneath the last spike, for collecting the liquid; and
a module for recirculating the basting liquid, also having a parallelepiped form, equipped with a roller chain transport mechanism, which collects via a container, preceded by a homogenizer, the liquid from a reservoir to a removable recipient being located in the upper part of the module, from where the liquid, via the top gutter, flows in the mentioned distributor.

The module for recirculating basting liquid using a roller chains transport mechanism is large and for the periodical sanitation of the liquid transportation container and homogenizer, they must be disassembled from the transport mechanism.

The technical problem solved by the invention consists in the recirculation, of a liquid used, in a vertical rotisserie machine, for basting rotisserie products by means of pouring, by pumping the basting liquid, said liquid having a controlled liquidity and being previously homogenized.

Another object of the invention is ensuring that a constant amount of basting liquid at once is poured over the grill content, regardless of the viscosity of the basting liquid or pump capacity of the pump, ensuring at the same time, a uniform distribution of the basting liquid over the products to be roasted placed along the entire length of the spikes;

Further object of invention is to use peristaltic pump to ease pump maintenance by non-technical personnel, as the liquid to be pumped never comes into direct contact with the inner parts of the pump.

Further object of invention is to detect hose rupture or crack within the pump area more specific in the pump chamber of the pumping circuit as the pressing action exerted by the rollers or lobes of the pump's rotor on the hose portion within the chamber of the peristaltic pump stresses this section, eventually leading to its rupture and leakage of liquids that happens in areas that are not always visible for the operator during the normal operation of the rotisserie machine.

Another objective of the invention is to provide the possibility of self-cleaning the pumping circuit.

The basting liquid recirculation module for vertical rotisserie unit (shortly: liquid recirculation module/ recirculation module) for a vertical rotisserie machine/ the Vertical rotisserie machine with module for recirculation of a basting liquid according to the invention is defined by its characteristics highlighted in claims 1-15.

Below are presented examples for executing the invention in connection with the pictures 1-13 representing:
- Fig. 1A representation in simplified perspective of a first variant of a basting liquid recirculation module for vertical rotisserie unit (shortly: liquid recirculation module), according to invention, highlighting its main components;
- Fig. 1B, more detailed view of the inner part of the liquid recirculation module from fig. 1A and;
- Fig. 1C, schematic representation, in perspective, of another variant of the liquid recirculation module, according to invention;
- Fig. 2, frontal view of a vertical rotisserie machine, the vertical rotisserie unit being equipped in the upper part with a basting liquid distributor and in the bottom part with a tray for collecting the liquid drained/flowing from the roasted products, having attached to it a liquid recirculation module according to invention;
- Fig. 3A, detail of fig. 1A and 1B illustrating an action bar assembly of a liquid homogenization assembly from the liquid reservoir and removable tiltable liquid recipient, for the purpose of tilting said recipient to a gutter connected to distributor;
- Fig. 3B, detail of another variant of the action bar assembly illustrated in fig. 3A, corresponding to the simplified variant of the liquid recirculation module from fig. 1C, driving the homogenization assembly from the liquid reservoir only;
- Fig. 4, detail of the upper part of the liquid recirculation module from fig. 1A, and 1B illustrating a removable tiltable/pivotable liquid recipient;
- Fig. 5, detail of the lower part of a liquid recirculation module, according to the invention, illustrating homogenization assembly of the basting liquid during roasting process;
- Fig. 6A, details from the middle section of a liquid recirculation liquid recirculation module illustrating a first variant of some means for detecting possible rupture or crack at the hose of rotative peristaltic pump for transporting the basting liquid;
- Fig. 6B, detail illustrating another variant of the means for detecting possible rupture or crack at the hose of the rotative peristaltic pump for transporting the basting liquid;
- Fig, 7, a peristaltic pump pipe assembly for liquid transport including hose of peristaltic pump forming together a liquid pumping circuit;
- Fig. 8, a top gutter located in the upper part of the basting liquid recirculation module, moving the basting liquid into the distributor of the vertical rotisserie unit;
- Fig. 9, detail of the upper part of the recirculation module of fig. 1A, and 1B illustrating the removable liquid recipient from the upper part of the module, in which the liquid raised by the peristaltic pump is collected, and which is emptied by tilting in the top gutter of fig. 8;
- Fig. 10, detail illustrating the principle of homogenizing the basting liquid located in the reservoir at the bottom of a liquid recirculation module, according to the invention;
- Fig 11A, detail of the lower part of a recirculation module according to the invention, illustrating a mechanism for inserting/retracting the end of a liquid transport pipe, in the liquid reservoir located in the lower part of the liquid recirculation unit, provided that the pipe is in the reservoir;
- Fig 11B, illustrates the mechanism of inserting/retracting the end of a liquid transport pipe, in the liquid reservoir, from fig.11A, provided that the pipe is out from the reservoir;
   Fig. 12, illustrates a wash liquid collector and transfer tray for collecting and transferring a wash liquid into a drain hose or drainpipe.
- Fig. 13, details of the upper part of the recirculation module from fig. 1C illustrating the top gutter from fig. 8, into which the liquid lifted by the peristaltic pump directly flows;

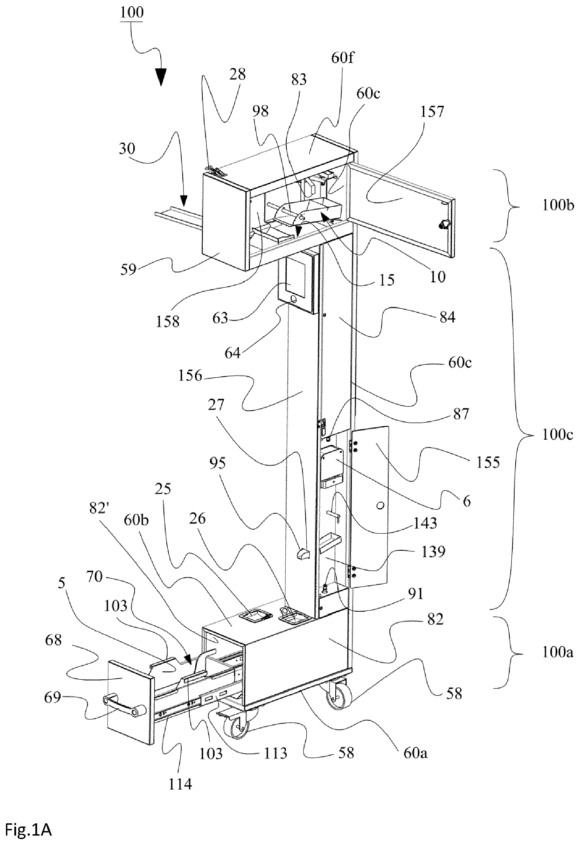

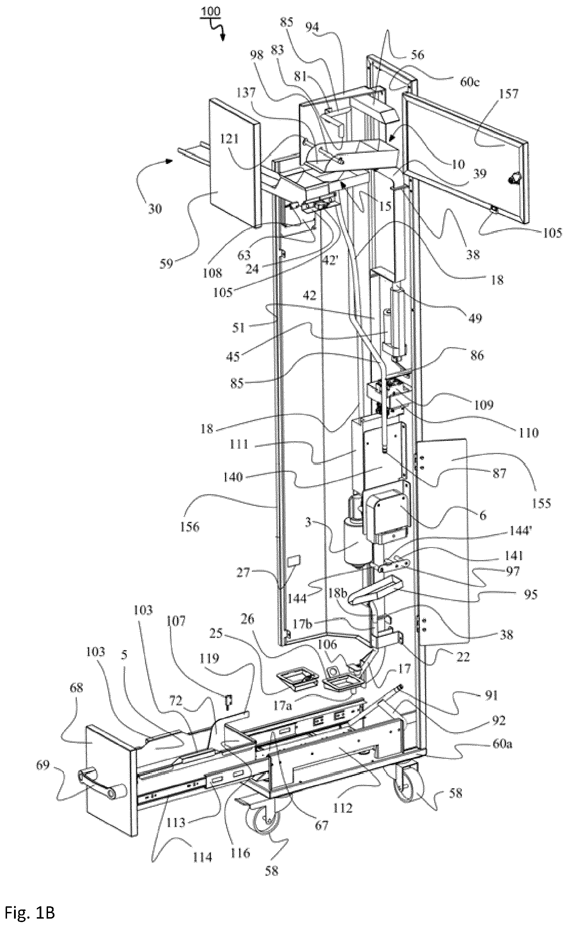

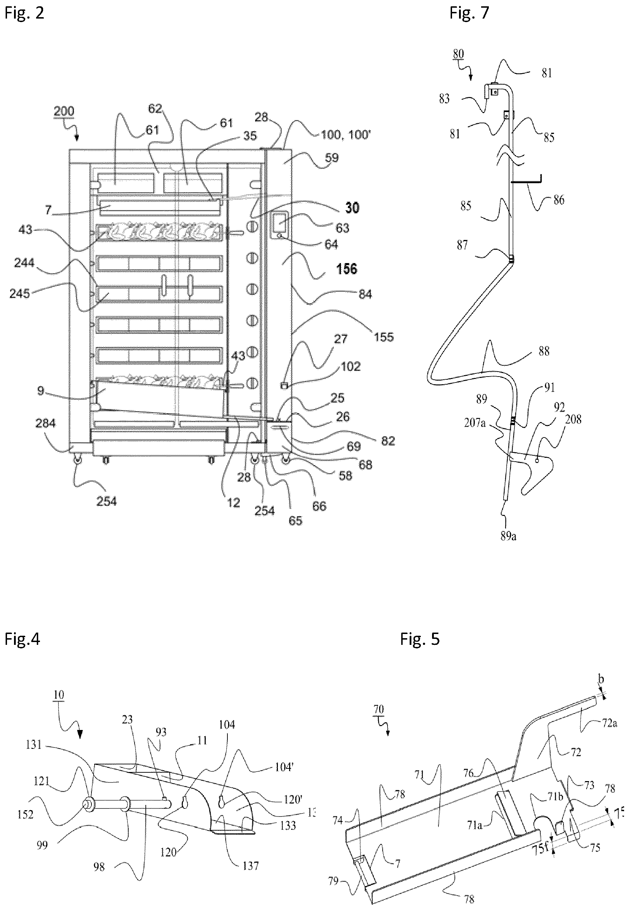

In fig. 1A, 1B and fig. 2 it is illustrated a liquid recirculation module 100, of a basting liquid for a vertical rotisserie unit 200, (together making the vertical rotisserie machine represented in fig.2), adapted by equipping its upper part, above the highest spike/sword 43 with products to be roasted, with a liquid distributor 7, being supplied with liquid, so as to pour at certain time intervals, corresponding to culinary recipes of the preparations, liquid on the products to be roasted placed along the entire length of the spike/sword 43; at the bottom part, beneath the lowest spike/sword 43 with products to be roasted, the adapted vertical rotisserie unit 200 is equipped with a removable liquid collector 9 for collecting the liquid falling from the roasted products.

The adapted vertical rotisserie unit 200 is equipped with gas burners or electric heaters 244 and radiators 245. The distributor 7 of the vertical rotisserie unit 200 is located beneath a thermal heat chamber 62 intended to store some boxes 61 of the heat chamber for heating and cooking meat and vegetables.

With regard to fig. 1A, the liquid recirculation module 100 of the flavouring and tenderizing liquid consists in a wheeled bottom part 100a, equipped with a support plate 60a, on two pairs of wheels 58, 65 (see Fig. 2) for moving the recirculation module 100, an upper part 100b, in this embodiment, both in the general shape of parallelepiped-rectangular boxes, and a central part 100c, in this embodiment, in the form of a column also parallelepiped-rectangular, with a narrower base, located between bottom part 100a and upper part 100b, the central part joining the right-rear corners of the bottom and upper part, the three parts having a common reinforced back panel 60c, mounted on support plate 60a of the bottom part and having side walls coming into contact with the rotisserie unit in the same plane, so that the recirculating unit 100 could be attached to the adapted vertical rotisserie unit 200.

In the embodiment illustrated in the fig. 1A the recirculating unit 100, from its side view, has the shape of a digitized C letter.

In one version of the liquid recirculation module 100, it cannot be wheeled, when being attached and supported as a door on its hinges (here not shown) connecting the liquid recirculation module 100 with the grill unit 200. In that case the support wheels 58, 65 are no longer mandatory on the support plate 60a. The liquid recirculation module 100 is intended to be attached to a vertical rotisserie unit 200, as indicated in fig. 2, taking over the basting liquid from liquid collector 9 and transporting it to distributor 7.

The basting liquid recirculation module 100 illustrated in fig.1A and fig.1B, according to invention, contains:
in the lower part 100a, a drawer 68 without bottom plate, slidable via a pair of telescopic slider arms 113, 114 being supported in the slider supports 112 mounted mechanically on lateral panels 82, 82' and support plate 60a, is equipped with a plastic handle 69, said drawer 68 containing a liquid reservoir 5, having the form of an elongated rectangular box, and being equipped with a liquid homogenization assembly 70 (see Fig.5), both of them preferably being removable. The reservoir 5 being initially filled with basting liquid, and during the cooking by draining the liquid from the liquid collector 9 in it through a pipe or a sliding gutter 12 (fig.2), which pass through a rectangular/ corresponding hole provided in the lateral panel of the vertical rotisserie unit 200, said pipe being inclined towards the removable liquid reservoir 5 sitting on a heated plate 67; said liquid reservoir 5 being provided with two side handles 103 for easy handling.

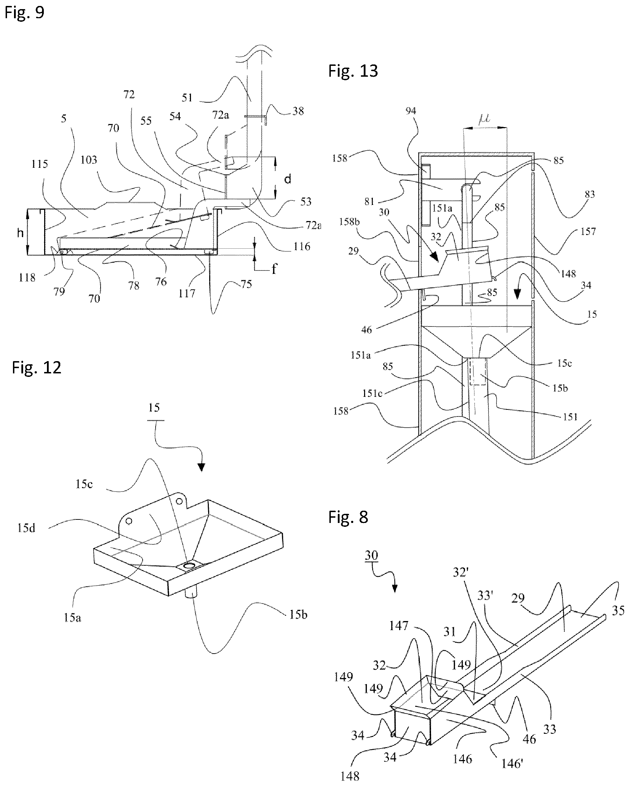

In the upper part 100b of the recirculation module 100, is located a removable/detachable pivotable/tiltable liquid recipient 10 (hereinafter, pivoting recipient/ upper pivoting recipient) from which the liquid is poured into a top gutter 30 (illustrated in fig. 8), by whose means it flows into distributor 7 located in the vertical rotisserie unit 200 (fig.2).

In central part 100c, are located means for transporting the liquid via a liquid pumping circuit, containing a peristaltic pump 6, for instance a rotative/rotary peristaltic pump with electric motor 3, a pump pipe assembly 80 (illustrated in fig. 7), including a hose 88 of peristaltic pump 6, making the connection between removable liquid reservoir 5 and tiltable recipient 10, preferable removable, for transferring the liquid; said means of transporting being also provided with a tube insertion mechanism 90 for inserting or removing a mobile pipe 89 of the pump pipe assembly 80 in/from reservoir 5, depending on the closed or open position of the drawer 68, respectively.

As the recirculating unit 100 is attached to the adapted vertical rotisserie unit 200, the removable top gutter 30 is passing through two corresponding slits from the adjacent side walls of the upper part 100b and of the adapted vertical rotisserie unit 200, being placed to rest on the distributor 7. The pivoting recipient 10 is tilting around a pivot axle 98, for immediate transfer of the entire quantity of pumped liquid, until the moment of tipping, into the removable top gutter 30, which conducts this liquid quantity into distributor 7, thus ensuring the necessary liquid quantity in said distributor 7, so that it evenly pours liquid on the products to be roasted along the entire length of spikes 43.

The time interval between two consecutive tipping moments of the pivoting recipient 10 depends to the flow rate of the peristaltic pump 4 and the volume of liquid required for the distributor 7, each tilting moment being determined by the liquid level in the pivoting recipient 10.

As is shown in fig. 1A and fig. 1B, the pivoting recipient 10 has the longitudinal axis perpendicular to a longitudinal axis of the top gutter 30.

An action bar assembly 40, is located also in the central part 100c, driving the liquid homogenization assembly 70 for homogenizing the liquid present in removable liquid reservoir 5 and a tiltable liquid recipient 10, for the purpose of transferring liquid to the top gutter 30.

A command and control system of the operating conditions of recirculation module 100, which uses sensors to check the work position of drawer 68, pivoting recipient 10 and removable top gutter 30, as well as the liquid level in removable liquid reservoir 5 and pivoting liquid recipient 10, ordering the operation of peristaltic pump 6 and action bar assembly 40.

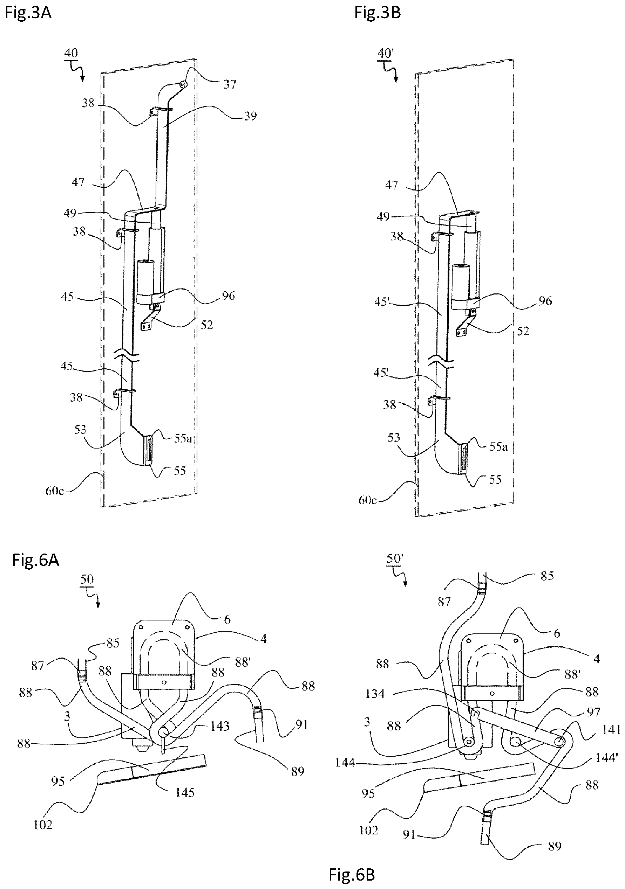

The basting liquid recirculation module 100, according to invention, further contains: means for detecting a rupture or crack at the hose of the peristaltic pump (hereinafter, hose rupture detecting means) in the two variants 50, 50' (fig. 6A and fig. 6B). The command and control system ensures the working conditions both in normal operation and in washing mode.

The basting liquid recirculation module 100 can have, in addition to the normal operating mode, a washing mode. In this respect, the liquid recirculation module 100, according to invention, further contains a drainpipe circuit for the purpose of cleaning the pipe assembly 80 of the pump circuit within the liquid recirculation module 100.

In a washing mode the liquid container 5 is filed with a washing liquid instead of basting liquid, said pivoting recipient 10 is removed and having the liquid homogenization assembly 70 in the lower position in reservoir 5. The drainpipe circuit comprises a wash liquid collector and transfer tray 15, located, as pivoting recipient 10 is removed, under said outlet 83 of said pump pipe assembly 80, a drain hose 18 mounted in quasi vertical position, and a short drainpipe 17 with vertical orientation. The drainpipe 17 is mechanically mounted by means of a support 22 to the reinforced back panel 60c of the recirculation module 100 and has an outlet 17a for wash liquid at its bottom end located, when the drawer 68 is closed, above the liquid container 5 and a frustoconical fitting 17b at its upper end, to be firmly attached to lower end 18b of the drain hose 18. The upper end of said drain hose 18 is connected to an outlet pipe 15b of the said wash liquid collector and transfer tray 15.

With respect to the housing delimiting the liquid recirculation module 100, in fig. 1A, are represented:
in the upper part 100b, a front panel 59, a side door 157 for access to tiltable liquid recipient 10, wash liquid collector and transfer tray 15 (a kind of liquid funnel), and a removable top gutter 30, the panel 158 opposite to door 157 being provided with an orifice 158b (see fig. 13) through which (when door is closed) the top gutter 30 passes towards the vertical roaster 200, and a cover plate 60f equipped with fastening clamps 28 for attaching module 100 to the adapted vertical rotisserie unit 200 (see also fig. 2); The top gutter 30 exits the recirculation module 100 to enter, through an identical/similar cut-out from the adjacent panel to the panel 158, of the adapted vertical rotisserie unit 200, into the vertical rotisserie unit 200, where it rests on the distributor 7.

In central part 100c, a frontal panel 156 having in the upper part a human-machine interface HMI with touch screen 63, a door 155 made of Plexiglas or glass, for access to the compartment of peristaltic pump 6, completed, in the upper part, with a right side panel 84, the reinforced back panel 60c, common to the entire module 100 being mounted on the support plate 60a, preferable located on the two pairs of wheels 58, 65 for moving the recirculation module 100;

The bottom part 100a, additionally containing two lateral panels 82, 82' and upper cover 60b (fig.1B), supporting two removable, funnel-type, intermediary gutters 25, 26, which, when drawer 68 (here shown with liquid homogenization assembly 70 positioned in it) is closed, have their outlets above reservoir 5. The drawer 68 can be manual or electronic driven. The other exterior panels forming the housing of the liquid recirculation module 100 and which are not mentioned, do not have any relevant characteristics.

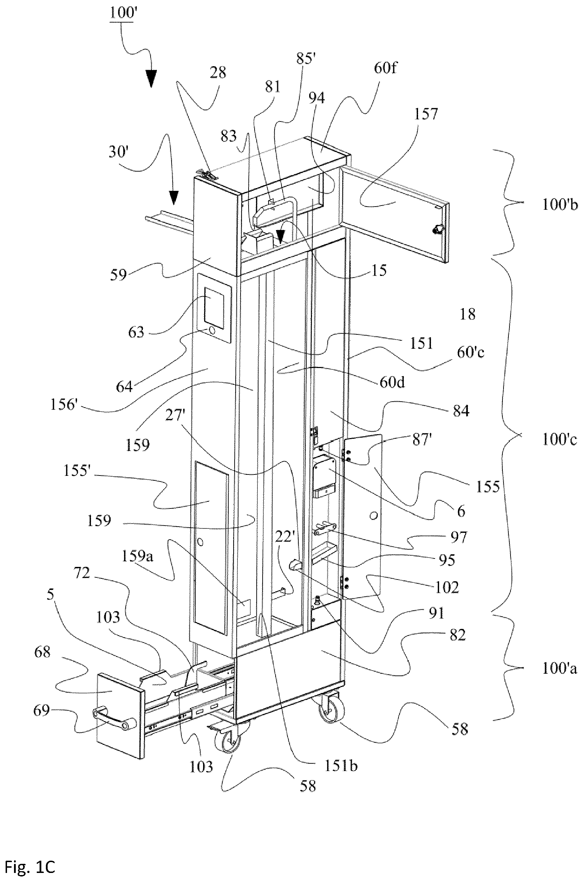

In fig. 1A is shown some elements of a hose rupture detecting means 50 (for more details, see Fig. 6A), where is used a single guide pipe 143 to guide the hose 88 towards the peristaltic pump 6 chamber; while in fig. 1B and 1C the liquid recirculation unit is equipped with a variant of hose rupture detection means 50' (for more details, see fig. 6B), with two drip-enforcer guide pipes 144, 144' for hose and one hose guide pipe 141.

In Fig 1B are also highlighted the components of the command and control system of operation conditions of basting liquid recirculation module 100, containing some position and level sensors, which shall be presented in the following paragraphs, some circuit breakers and relays 109, located on the support of the circuit breakers and relays 110, a power sources 111, which in a described embodiment is a DC electrical power supply source mounted on a support plate 140 being attached to a reinforced back wall 60c.

Operation commands for the basting liquid recirculation module 100 are given by an operator using the touch screen 63 and on/off button 64, located on the front door panel 156 (fig. 1A, 1C and fig. 2), via the human-machine interface HMI implementing the command and control system.

Fig. 1C is a schematic representation of another embodiment of the liquid recirculation module 100' which has the general form of a rectangular parallelepiped, having a bottom part on wheels 100'a (which is very similar/identical to part 100a), equipped with a support plate 60a, on two pairs of wheels 58, 65 (the other side pair of wheels 65 is shown in Fig. 2) for moving the recirculation module 100', an upper part 100'b, and a central part 100'c. The basting liquid recirculation module 100', can have, in addition to the normal operating mode, a washing mode. In this respect, said central part 100'c is compartmentalized/divided by a reinforced middle panel 60d in a front part, which communicates directly (without partitions) with the upper part 100'b and the lower part 100'a. Central part 100'c has in its front part a wash liquid drain circuit consisting of a wash liquid collector and transfer tray 15, an elongated quasi vertical orientated drain tube 151 for guiding, in the washing mode, (where the basting liquid is replaced with a wash/cleaning liquid, like dishwashing liquid) from the pump pipe assembly 80, after the cleaning liquid has passed through the pump pipe assembly 80, back to the container 5. The back part of the said central part 100'c, mainly comprises: means of transporting liquid, a simplified action bar assembly 40' (fig.3B) driving solely the liquid homogenization assembly 70 from reservoir 5, and a command-and-control system of the operation condition of recirculating module 100'. The means of transporting liquid comprise a liquid pumping circuit, containing a rotative peristaltic pump 6 with electric motor 3 and a pump pipe assembly 80 including the hose 88 of peristaltic pump 6. Said peristaltic pump has a volumetric flow that ensures the required liquid supply in the distributor 7 so that it pours liquid on all the rotisserie products strung along the entire length of the spikes 43. For example, peristaltic pump has a volumetric flow rate between 6 and 10 times the gravitational drain rate of the distributor 7.

In this embodiment, the means of transporting for the liquid mentioned above, makes the direct connection between the removable reservoir 5 and the top gutter 30', which leads the liquid into the distributor 7. The peristaltic pump 6 has a flow rate sufficient to supply the distributor 7 directly, consequently, the pivoting recipient 10, with the role of accumulating and transferring the liquid from a peristaltic pump 6 with a lower flow rate to distributor 7, is no longer being necessary.

Regarding the panels of the housing of the central part 100'c of the recirculation module 100', in fig. 1C are displayed: a 156' front panel, having at the top the touch screen 63 of the human-machine interface (HMI) and in the bottom part a Plexiglas/glass door 155', for easy access to pump chamber 6 and hose rupture detection means 50', a left lateral panel 159 equipped with a cavity 159a used for inserting gutter pipe 12, for draining the liquid from liquid collector 9 into reservoir 5. The frontal part of the central part 100'c of the basting recirculation module 100' communicates both with the upper part 100'b as well as with the bottom part 100'a, so that the cover 60b is no longer necessary. The other panels forming the casing/housing of the recirculation module 100' are common with the ones of the module 100, noting that at the upper part 100'b, the panel 158 opposite to door 157 is provided with an orifice (here not seen) through which the elongated bottom plate 29 of the top gutter 30 (fig. 8) exits towards the distributer 7 being positioned in the vertical rotisserie unit 200.

The action bar assembly 40' (see Fig. 3B), is located also in the central part, 100'c, driving only the liquid homogenization assembly 70 for the purpose of liquid homogenization for the liquid present in reservoir 5.

For the purpose of cleaning the pipe assembly 80 in a washing mode of the pump circuit within the liquid recirculation module 100', the liquid container 5 is filed with a washing liquid instead of basting liquid, said top gutter 30' being removed and having the liquid homogenization assembly 70 in the lower position in reservoir 5. The liquid recirculation module 100' further comprises a drain pipe circuit comprising a wash liquid collector and transfer tray 15 located under said (liquid receiving chamber 32 of the top gutter 30' to collect wash/cleaning liquid from the) outlet 83 of said pump pipe assembly 80, as said top gutter 30' being removed and an elongated quasi vertical orientated (10-20 degrees) drain tube 151 being mechanically mounted by means of a support 22' to the reinforced middle panel 60d of the recirculation module 100', for guiding the wash/cleaning liquid from the pump pipe assembly 80, after the cleaning liquid has passed through the pump pipe assembly 80, back to the container 5 so that the washing liquid flows (leaks) down on the walls of the drain tube 151 located in said front part of the central part 100'c, said drain tube 151 having its upper end connected to an outlet pipe 15b of the said wash liquid collector and transfer tray 15 and having its lower end above the liquid container 5.

The command-and-control system is implemented for the operating conditions of the recirculation module 100', which checks by means of sensors the check the working position of the drawer 68, and of the top gutter 30', as well as the liquid level in reservoir 5, ordering the operation of the peristaltic pump 6 and the action bar assembly 40'. Like in the first embodiment, the command and control system ensures the working conditions both in normal operation and in washing mode.

The central part 100'c has a general parallelepiped-rectangular form, with the same dimensions of the base as bottom part 100'a and upper part 100'b of the liquid recirculation module 100' and being located between them, said three parts of the liquid recirculation module 100' having a common reinforced back panel 60c on which said action bar assembly 40' is mounted, said back panel 60c being mounted on the support plate 60a of the bottom part 100'a, so that the entire recirculation module 100' has the shape of a parallelepiped-rectangular column.

The recirculation module 100' is also intended for being attached to a vertical adapted rotisserie unit 200, the cover 60f being also equipped with fastening clamps 28 (as presented in fig. 1C and fig. 2). In this respect, a right lateral panel 159 of the recirculation module is provided with a passing rectangular hole 159a in the lower part through which the pipe or sliding gutter 12 coming from the removable liquid collector 9 from adapted vertical rotisserie unit 200; through passing rectangular hole 159a in the lower part of the left lateral panel of the module 100', the pipe 12 gets above reservoir 5; And similar like in first embodiment, in the upper part 100'b, the left side panel 158 of the basting recirculation module 100' adjacent to adapted vertical rotisserie 200 (opposite to door 157), is provided with a cut-out by whose means, the elongated bottom plate 29 of the top gutter 30' exits the recirculation module 100' to enter, through an identical cut-out from the adjacent panel of the adapted vertical rotisserie 200, into the vertical rotisserie 200, where it rests on the distributor 7.

Referring to Fig. 3A illustrating the action bar assembly 40 for driving the liquid homogenization assembly 70 in reservoir 5 and, in the first embodiment of the liquid recirculation module 100, tilting the removable liquid recipient 10. In the concrete example, the action bar assembly 40 comprising an action bar 45, for instance a bended metal bar having three sections, two parallel aligned vertical orientated sections 39, 51 (further referred to as the lower action bar 39 and the upper action bar 51), and one horizontal section 47 (further referred to as the drive strip 47) which is fixed at the end of the slide tube 49 of a linear actuator 96. For instance, the linear actuator 96 is a mechanical linear actuators typically operate by conversion of rotary motion of a DC motor into linear motion using a screw mechanism.

The upper action bar 39 is provided at its upper end with a plastic wheel 37 (i.e. Teflon), for actuating tiltable liquid recipient 10, with which it comes into mechanical contact, without shock and with reduced friction; and a lower action bar 51 is provided at its lower end with a strip 55 in form of an elbow a strip/plate for driving the liquid homogenization assembly 70. The strip 55 is provided with a slot 55a to couple to/engage with homogenization assembly.

The linear actuator 96 is parallelly aligned with the reinforced back panel 60c (dotted line) of the recirculation module 100, 100', its bottom end being fixed, by means of a mechanical support 52 on the reinforced back panel 60c, while the slide tube 49 of actuator 96 is vertically positioned, its exterior end being mechanically fixed to the drive strip 47 of the action bar 45, 45'.

The linear actuator 96 is equipped with an DC electrical motor, powered for example at 12 or 24V, capable of changing the rotational sense, and moving the action bar 45 up- and downwards with a restricted adjustable stroke (a custom stroke length), as to be suitable to properly operate the homogenization assembly 70 and tiltable liquid recipient 10. In this way, the action bar 45 can move upwards and downwards, if driven by the slide tube 49 of the linear actuator 96.

Fig. 3B presents another variant of the action bar assembly 40' corresponding to the second example (simplified version) of the basting recirculation module 100' illustrated in fig. 1C. In this variant, in the absence of tiltable liquid recipient 10, the upper action bar 39 for its driving, together with the corresponding elements: wheel 37, and supports 38 for guiding and positioning the upper action bar 39 isn't necessary.

With reference to FIG. 4, the pivoting recipient 10, is located in the upper part of the liquid recirculation module 100, preferable detachable. It has the form of an elongated rectangular box, opened both at upper part as well as in the front - towards the top gutter 30, in which the basting liquid is poured, the two side walls 131, 131' having rounded front ends, the base plate 137 of the pivoting recipient 10 continues with an inclined extension lip 133, which avoids dripping during the process of pouring the flavouring and tenderizing liquid from the pivoting recipient 10 into the inlet chamber 32 of the removable top gutter 30. Each of two side walls 131, 131' has towards the frontal end, a circular hole 120, 120' having the centres on the pivot axis, said holes being provided with a slit for passing a locking pin 93 fixed on the pivot axle 98, to allow the pivoting recipient 10 to tilt on the axle 98.

The pivot axle 98 is equipped, at its free end, with a locking pin 93, and the mentioned axle 98 has at the end opposite to locking pin 93 a cylindrical extension 152 with guidance role, fastened in a reinforced lateral plate 94, mechanically fixed perpendicularly to the reinforced rear panel 60c, in the upper part 100b of the liquid recirculation module 100. A guide ring 121 ensures that the pivot axle 98 is positioned and held perpendicular to the rear panel 60c of the recirculating unit 100, when fixed in the liquid recirculation module 100, said pivoting recipient 10, also removable, being able to slide along the pivot axle 98 until a lateral wall 131 of the pivoting recipient 10 being blocked by a sliding stroke limiter 99 fixed to/ located on the pivot axle 98.

The pivoting recipient 10 is provided with a separation wall 11, positioned between the two lateral walls 131 and 131' of the pivoting recipient 10, perpendicular to them, being aligned parallel to the back wall 23 of the pivoting recipient 10 or, preferably, inclined between 5 and 25 degrees from the vertical towards back wall 23.

The distance between separation wall 11 and back wall 23 is about one third of the total length of the base plate 137 of pivoting recipient 10, said separation wall 11 not touching the inside of the base plate 137, divides the pivoting recipient 10 into two communicating liquid compartments:
the part of pivoting recipient 10, between extension lip 133 of base plate 137 and partition wall 11 being a liquid supply and discharge compartment, located below the outlet 83 of the stationary pipe 85 of the pipe assembly 80,
the other part of the pivoting recipient 10, between the partition wall 11 and the rear wall 23 being a liquid level reading compartment in the pivoting recipient 10, being located under a liquid level sensor 57 positioned on a support 56 mounted on the reinforced side plate 94.

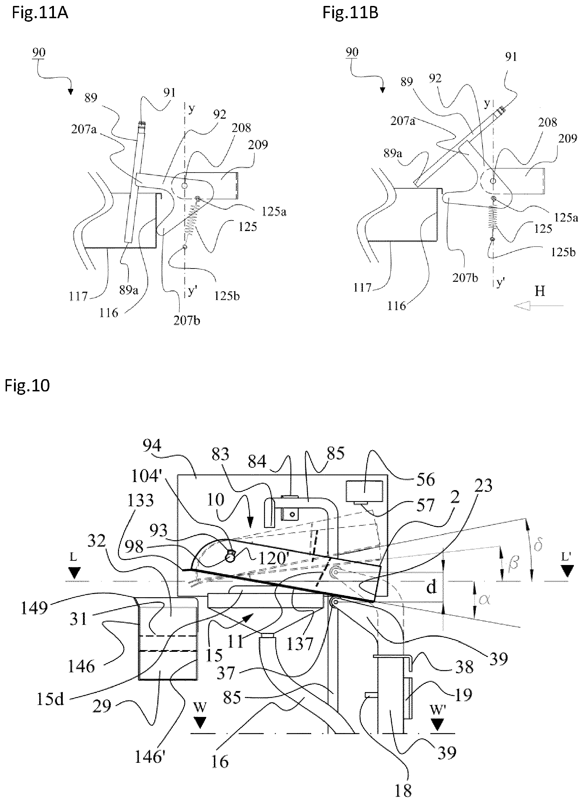

With reference and to fig. 4 and fig. 10, when the slide tube 49, through the drive strip 47, drives the action bar 45 upwards, the upper action bar 39, by means of wheel 37 positioned at its end, comes into contact with the bottom plate 137 of recipient 10, if recipient 10, by means of a tilting base 135 is positioned on the pivot axle 98, so that the pivoting recipient 10 tilts around this axle.

The detachable liquid recipient 10 could also be provided with an outer lip of the pivoting recipient 10 (not shown) being foreseen on one of the side walls 131, 131' or 23, and is being parallelly aligned with the bottom plate 137 of the said recipient 10 such to rest on wheel 37 of the upper action bar 39 for driving and tilting it towards the top gutter 30.

The action bar assembly 40 or 40', is said to be in its default position when the slide tube 49 has reached its fully retracted length. The recirculation module 100, 100' always starts a recirculation cycle from this default position.

As was said above, when the slide tube 49 of actuator 96 is in default position and the pivoting recipient 10 is firmly positioned on the pivot axle 98 (fig. 4), then the base plate 137 of pivoting recipient 10 leans, via wheel 37, on the upper action bar 39 of the action bar 45 and the bottom plate 137 forms an angle δ, measured relative to a level line L-L'. Additionally, in normal operation mode the removable container 5 is mounted in drawer 68, being loaded with basting liquid, drawer 68 being closed, spike 43 strung with products to be roasted, and adapted vertical rotisserie turned on.

In this situation, in regard to fig. 7, when peristaltic pump 6 is activated, then it transfers the liquid from pivoting recipient 10 through pipes 85, 89 and hose 88 from the pump pipe assembly 80 and falls, through outlet 83, in the supply and discharge compartment, where the process of filling the liquid level reading compartment in the pivoting recipient 10 begins.

When the liquid level in the pivoting recipient 10 reaches a pre-set height, for example, level line L-L', measured by liquid sensor 57, then the pump 6, by means of electronic control, is closed and the linear actuator 96 is activated. At this moment, the slide tube 49 of actuator 96, pushes, via drive strip 47 of the action bar 45, hence, lower and upper action bar, respectively 39, 51, upwards by a distance d (fig. 9, 10) corresponding to restricted adjustable stroke of the slide tube 49, herewith starting the tilting of the pivoting recipient 10 around the pivot axis 98, counter clockwise, until the base plate 137 of the recipient makes an angle β, in our case around 10 degrees, measured counter clockwise relative to the level line L-L'.

Starting from the horizontal position of the tiltable liquid recipient 10, the liquid from the reading compartment will move, through the gap between the separation wall 11 and base plate 137 of tiltable liquid recipient 10, into the compartment for liquid supply and discharge, and from there, the liquid will start to spill over lip 133 into liquid receiving chamber 32 of the top gutter 30; when the base plate 137 of the container forms an angle β, the pivoting actions resulting from the upwards movement of the slide tube 49 will move the liquid pumped in tiltable liquid recipient 10, into the liquid receiving chamber 32 of the top gutter 30 and from here, flowing on the elongated bottom plate 29 and lip 133, the basting liquid gets transferred into distributor 7.

Simultaneously, in reservoir 5 (fig.9), through the lower action bar 51 of the action bar 45, the liquid homogenization assembly 70 is pivoted clockwise. In this position, the action bar 45 is again in the default position.

When the upper action bar 39, due to the upward movement of the slide tube 49 has moved a distance d, then sensor (here not shown) stops the DC motor of actuator 96; after a pre-set time interval, for example 5 to 10 seconds, an electronic control reverses the polarity of the DC motor and the slide tube 49 of the linear actuator 96 begins to pull the action bar 45 downwards, starting the clockwise pivoting of the tiltable liquid recipient 10, until the slide tube 49 has reached it maximum retractable position, stopping the actuator's motor and reversing again the polarity to said motor, without coupling it; simultaneously, in reservoir 5 (fig. 9), by means of the lower action bar 51 of action bar 45, the liquid homogenization assembly 70 is pivoted clockwise. In this position, the action bar 45 or 45' is again in the default position.

Afterwards, for assuring that no liquid remains in pipes 85, 89 and hose 88 of the pump pipes assembly 80, an electronic control reverses the rotation direction of motor 3 of peristaltic pump 6 (Fig. 1B), for example by reversing the polarity of the supply voltage, and couples the pump to begin emptying the pipes 85, 89 and hose 88; after a pre-set time interval, for example 10 seconds, again by electronic control, the polarity of the supply voltage of motor 3 is reversed, but the motor is no longer engaged.

The angle δ for positioning or removing the pivoting recipient 10 from the pivot axle 98 (see fig. 10) is between 15 and 25 degrees, preferably 15 till 18 degrees, and greater than the tilt angle β, both measured relative to level line L-L' passing through pivoting recipient 10 in default position.

As it results from the construction of the action bar assembly 40, in the embodiment of invention, the liquid homogenization assembly 70 together with the pivoting recipient 10 are always simultaneously engaged by the action bar 45, this regardless of whether the pump 6 for vertical liquid transport is engaged or not. In case of second embodiment of invention the action bar assembly 40', only the liquid homogenization assembly 70 is engaged by the action bar 45'.

With reference to, Fig. 5 where is illustrated the liquid homogenization assembly 70 from the liquid reservoir 5, which is a detachable one in this embodiment, comprises: a plate 71, having a rectangular shape, similar to the bottom plate of the liquid reservoir 5 but smaller dimensions so that it may be immersed in reservoir 5. The plate 71 is equipped also with a round cutting 71b having the diameter twice the outer diameter of the movable pipe 89, said cutting being used for inserting/extracting the bottom end 89a of the movable pipe 89, in/from reservoir 5.

An axis 79 is fixed at one end of the homogenizer plate 71, in two ears 74 thereof, on which the plate 71 can pivot when this axle 79 is articulated in a support 118 of the pivot axis, fixed on the lower plate 117 of the reservoir 5 (see fig. 9). A flat drive arm 72, perpendicular to the homogenizer 71 plate, is mounted on homogenizer plate 71 at the opposite end to the axle 79. The arm 72 ending with a flat finger 72a, through which the homogenization assembly 70 is connected to the action bar assembly 40 or 40'.

The homogenizer plate 71 has a rectangular form, being provided with:
two long sides 78 bent/wall in upward direction, forming an angle of approximately 90 degrees, to guide the flow of the liquid in reservoir 5,
in the direction opposed to pivot axle 79, an inclined wing 76 on the upper surface of the homogenizer plate 71. This wing results from a U-shape elongated cut in said homogenizer plate 71, followed by a bent in upward direction, clockwise forming an angle around 15 degrees, resulting in a slit 71a, so that the liquid from reservoir 5 flows through the mentioned slit 71a created during the downwards pivoting movement of the homogenization plate 71, due to the inclination of the wing 76, being forced to flow on the upper surface of the homogenizer plate 71, being also guided by the guiding sides 78. At the end corresponding to the drive arm 72, the rear end of the homogenization plate 71, the orifice 71b through which the lower end of the pump pipe assembly 80 enters the reservoir 5, an extension 73 having the role of a spacer, and
two L-shaped side spacers 75, positioned opposite to each other across the width of the plate 71, the width 75k of each L-shaped spacer 75 corresponds to or being smaller than half the distance between width of reservoir 5 and width of the homogenization plate 71.

And again to FIG. 3A and 3B when the lower action bar 51, which acts on the liquid homogenizing assembly 70 to which it is connected by means of a flat finger 72a, is in default position, then the finger engager strip 55 at the bottom end 53 of the lower action bar 51, is positioned just above the rear wall 116 of the reservoir 5 and the vertical slit of the finger 55a. Its slot being wider than the thickness b of the finger 72a and longer than its width and being "centred on" and "aligned with" the finger 72a located on the extension of a drive arm 72 of a liquid homogenization plate 71 (fig. 5), allows the finger 72a to get smoothly in vertical slot 55a (fig 3A), without touching the finger engager strip 55, when the reservoir 5 with liquid homogenization assembly 70 mounted in it, is positioned in drawer 68 of the recirculation module 100 (fig. 1A-1C) and the drawer is closed or opened.

With reference to fig. 6A and 6B, basting liquid recirculation module 100 could be further provided with some rupture detection means 50 or 50' of the hose 88 on the segment 88' positioned inside the pump's chamber 4. The mentioned rupture detection means 50, 50' is disclosed in two alternatives comprising: a guide 143 for instance a cylindrical pipe or two pipes 144, 144' for guiding and changing direction of the ends of the hose 88 before entering the chamber 4 of the peristaltic pump 6, the guide pipe(s) being positioned underneath the chamber of the peristaltic pump is/are equipped with means intended to ensure that the hose 88 does not slide from the guide pipe(s); an inclined hose rupture detection gutter 95 for detecting rupture of the hose 88 in the portion 88' of the pump's chamber 4, as the surface of the mentioned gutter 95 covers the area located underneath the peristaltic pump 6, for collecting the liquid loss, the length of the gutter 95 exceeds the distance between an orifice 27 corresponding to this gutter, located on a panel 156 of the front door of the central part 100c, and the total length of the peristaltic pump 6, so that any fluid leaking from the hose to be visible by an operator and to fall through a removable intermediary gutter 26 located on an upper panel 60b of the lower part 100a, back to the reservoir 5.

In the first embodiment illustrated in fig. 6A, the drip-enforcer guide pipe 143, made from a material allowed in food industry, for example stainless steel, and positioned between 10 cm and 15 cm underneath the pump chamber 4, is a guiding device used for changing the direction of hose 88, by bending the ends of the hose, coming from the fixed pipe 85 and mobile pipe 99, located laterally on either side of the pump chamber 4, around the drip-enforcer guide pipe 143. In this way, the direction of the end of the hose located inside the pump chamber 6, relative to a vertical axis, because of their bending around the drip-enforcer guide pipe 143, goes up and down and up again.

When it uses only one guide 143 (as in fig. 6A), then this is preferably centrally positioned, underneath the chamber of pump 6; in illustrated embodiment, the drip pipe enforcer 143 is parallelly aligned with the reinforced back panel 60c of the recirculation module 100 and has one end mechanically fixed to a support plate 139 (fig. 1A) of the pump 6, while the other end is equipped with an elongated safety pin 145 facing downwards and having a length equal or greater than twice the outer diameter of hose 88 (in the concrete example, at least 4 cm), so as to ensure that the hose 88 is bent around the drip pipe enforcer 143 does not slip off it during operation of the recirculation module 100.

This change of direction assures that the liquid, leaking down on the exterior surface of the hose 88, resulting from hose rupture within the pump chamber 4, will detach under the influence of gravity, at the bend around the guide pipe 143, in form of drops falling from the hose 88 onto the hose rupture detection gutter 95.

In another embodiment illustrated in Fig. 6B, two drip-enforcer guide pipes 144, 144' have been used, horizontally aligned beneath pump chamber 4, 144 being the drip-enforcer guide pipe of the end of the hose coming from the fixed pipe 85, while 144' is the drip-enforcer guide pipe coming from the mobile pipe 89, the fixed pipe 85 and movable pipe 89, being located, this time above and underneath the pump chamber 4 of peristaltic pump 6.The additional guide pipe 141 ensures that the hose 88, reaching the drip-enforcer guide pipe 144' (if bent around 144'), goes from bottom to upper part, just before the hose coming from pipe 89 enters chamber 4 of the pump 6.

The additional pipe 141 ensures that the hose 88, reaching the guide pipe 144', (when bent around it 144'), goes from the bottom up, just before the hose coming from the pipe 89 enters the chamber 4 of the pump 6.

In this embodiment, to ensure that the hose remains positioned on the drip-enforcer guide pipes 144, 144' and guide pipe 141, the guide pipe 141 for guiding the hose 88 is equipped with a hose locking arm 97 having at one end a hook type cutting 134 to secure a protrusion 147 coming from the drip-enforcer guide pipe 144. Securing the hook type cutting 134 of the hose locking arm 97 over the protrusion 147 prevents the hose 88 from sliding from the guide pipes, fulfilling the function of the elongated safety pin 145 of the first embodiment.

In the second embodiment of the recirculation module 100', the liquid leaking from the hose will directly fall from outlet 102 of the hose rupture detection gutter 95 into reservoir 5.

In order for the hose rupture detection means 50, 50' to work correctly, it is necessary that the hose connecting to the connections 87, 91 of the pump pipe assembly 80 is designed as such that the portion of the hose coming from the movable pipe 89 (fig. 6B) and enters the pump chamber 4 bends around the drip-enforcer guide pipe 144, so that the liquid flow from the portion of the hose reaching the drip-enforcer guide pipe 143 and coming from the movable pipe 89 is oriented downwards, measured relative to a vertical axis, while the portion of the hose touching the drip-enforcer guide pipe 143 and entering the pump chamber 4 is oriented upwards, measured relative to a vertical axis.

It's possible, via drawings included in the mandatory instruction manual of the recirculation module, or via a detailed hose configuration schema visually present under the peristaltic pump, to instruct the operator of the machine how to shape and curve the hose (88), in the requested configurations such to obtain the desired effect, without having to make use of the guide 143 or guides 144, 144' whatsoever.

With reference to fig. 7 illustrating the pump pipe assembly 80 for transporting the flavouring and tenderizing liquid from the liquid reservoir 5 to the pivoting recipient 10 it comprises: a stationary pipe 85, having a vertical orientation, consisting of several sections so to have the outlet 83 positioned above the pivoting recipient 10 and the bottom end - inlet 87 provided with hose connection means, above peristaltic pump 6 or one lateral side of it, a movable pipe 89 having, in normal operation situation, also a vertical orientation. The upper end 91 of the movable pipe (outlet) is provided with hose connection means, being located underneath the peristaltic pump 6 or on its side opposite to that in which the lower end of the fixed pipe 85 is located, and the lower end 89a of the movable pipe being located in the liquid reservoir 5. The movable pipe 89 is driven by an insertion mechanism 90 (fig. 11A and fig. 11B) for the purpose of inserting or extracting the lower end 89a of the movable pipe 89 from reservoir 5. The bottom end 87 of the stationary pipe 85 is connected to the upper end 91 of the movable pipe 89 by means of the hose 88 specific to pumping circuits with peristaltic pumps having a section 88' lying inside of chamber 4 of the peristaltic pump 6, and the ends guided by the rupture detecting means 50, 50' for detecting of possible liquid losses due to rupture of hose 88 which may occur.

With reference to fig. 8 illustrating a top gutter 30, preferably detachable; it has an elongated rectangular shape, having at one end a liquid receiving chamber 32 formed between two side walls 146, 146', a rear wall 148 and a partial front wall 147 fixed on an elongated base plate 29 for draining purpose, ending in an outlet area 35 representing the other end of the top gutter 30, said partial front wall 147 having a bent portion 31 towards the outlet area 35, parallel to elongate bottom plate so that forming together the outlet 32' of said chamber 32, said elongated base plate 29 including outlet area 35 of the gutter 30 being provided with lateral liquid guiding edges 33, 33', each of said wall 146', 147, 148 of the liquid receiving chamber 32, which does not get into direct contact with the pivoting recipient 10 when tilting it, having a lip 149 at the upper part said lip being outwardly inclined to prevent liquid spilling during its transfer from the pivoting recipient 10 to the inlet of the liquid receiving chamber 32, and said rear wall 147 of the top gutter 30 being provided with two hooks 34 to be fixed on a support 24 of the top gutter 30, while the outlet area 35 of the top gutter 30', passes through two corresponding slit from the adjacent side walls of the upper part 100b, and of the adapted vertical rotisserie unit 200, being placed to rest on the distributor 7.

In the second embodiment of the invention it is used a similar top gutter 30' (not shown) the only difference being that all walls 146, 146', 147, 148 of the liquid receiving chamber 32 have a lip 149 at the upper part said lip being outwardly inclined to prevent liquid spilling during dropping from the outlet 83 of the pump pipe assembly 80 to the inlet of the liquid receiving chamber 32.

The fig. 11A and fig. 11B illustrate the mechanism of inserting/retracting the end of the liquid transport pipe 89 in/ from the liquid reservoir 5 of the embodiments of the invention disclosed in description.

The tube insertion mechanism 90 for the movable pipe 89 having the purpose of inserting or removing the mobile pipe 89 in/from reservoir 5 with liquid, is driven by the closing or opening of the drawer 68 in the lower part 100a/100'a holding the reservoir 5 comprises: a pivotable insertion arm 207 in a shape that can be associated with the letter V, having at on side/end 207a mounted the movable pipe 89, and the other side/end 207b being for driving the insertion mechanism 90' of the movable pipe 89, coming into contact with the rear wall 116 of the container 5 located in the drawer 68. The insert arm 207 is pivotable relative to an axle 208 mounted on a vertical support plate 209 being fixed to the reinforced rear panel 64c. A helical spring 125 is attached with the upper end 125a to the rear of the pivoting insert arm 207 and with the lower end 125b at a point located vertically passing through the pivot axis 208.

With reference to fig. 12 illustrating a washing liquid collector and transfer 15. It is a rectangular box, open at its top, having an inverted pyramidal bottom with flat top and cavity 15c, and a short pipe 15b welded on its bottom end centred over the cavity 15c. the back wall 15a of wash liquid collector and transfer tray 15 has an extension to be mounted on the back plate 94 of the liquid recirculation module 100 (fig. 1C).

In first embodiment of the invention, washing liquid collector and transfer 15 is located, under pivoting recipient 10 and in the washing mode as it is removed, under the outlet 83 of the pump pipe assembly 80 having the short pipe 15b in the upper end of the drain hose 18 (see Fig. 1B).

In second embodiment of the invention, washing liquid collector and transfer 15 is centred under said liquid receiving chamber 32 of the top gutter 30' and as in in the washing mode it is removed, under the outlet 83 of the pump pipe assembly 80 having the short pipe 15b to collect wash/cleaning liquid from the outlet 83 having the short pipe 15b in the upper end/ the inlet 151a of the rectangular pipe 151 of the drain tube 151 (see Fig. 1C and Fig.13). In the absence of top gutter 30 the washing liquid coming from outlet 83, falls directly into wash liquid collector and transfer tray 15.

While the rectangular drain tube 151 is slightly inclined towards the cutting 158b of the panel 158 opposite to door 157, so that the cleaning liquid discharged from the outlet 83, under the influence of gravity, flows via the cavity 15c and pipe 15b of the wash liquid collecting and transfer drain 15, over the interior face of the lateral wall 151c of the long drain tube 151 (avoiding splashing of liquid in container 5) and towards the outlet 151b positioned above container 5 (Fig. 1C), so that the washing liquid flows unhindered back to container 5.

The positioning of the top gutter 30 or 30' inside the recirculation module 100 or 100' is made through a cutting 158b in panel 158 opposite to door 157 (in closed position), the back plate 148 of the gutter pushing against the upper part of the rectangular tube 151, and the positioning strip 46 of the elongated bottom plate 29 leaning against the inner face of panel 158 opposite to door 157 in closed position, while the hooks 34 are being supported by hook support 24 (the hook support 34 isn't shown in fig. 13 for ease of simplicity).

Concerning the command-and-control system of the basting liquid recirculation module 100 is designed to ensure the operating conditions it, avoiding accidents during use, both in the actual operating state and in the washing state, being equipped with some sensors for:
a position sensor 105 placed on the hook support 24 of the top gutter 30, checking if the upper lateral door 157 of the liquid recirculation module 100 is closed; in case of a negative reading, the pump cannot be activated or stops, if operated;
a position sensor 108 placed in the upper part of the liquid recirculation module 100 for checking if the top gutter 30 is present in the liquid recirculation module 100; in case of a negative reading, the pump cannot be activated or stops, if operated;
a position sensor 107 placed in the area of the drawer 68 of the liquid recirculation module 100, checking if the drawer 68 of reservoir 5 is closed; in case of a negative reading, the pump cannot be activated or stops, if operated;
a liquid level sensor 57 in the pivoting recipient 10 that not only reads the liquid level in the pivoting recipient 10, but also checks whether said pivoting recipient 10 is in place in the liquid recirculation module 100, in case of negative reading, the pump cannot be activated or will stop in its action, if operated;
a liquid level sensor 106 for the liquid in the removable liquid reservoir 5 is positioned right above this reservoir and reads the liquid levels in the reservoir 5; when the levels are too high or too low, the pump cannot be activated or the pumping action will be stopped, and in the absence of reservoir 5 in the drawer 68, the reading will be negative and the pump cannot be activated.
a sensor 57 positioned on a support 56 placed in the upper part 100b of the liquid recirculation module 100 above the pivoting recipient 10 for reading the liquid level present therein or the absence of said pivoting recipient 10, when liquid level corresponds with the programmed values then pumping stops, in case of a negative reading, which happens in the absence of the pivoting recipient 10, the recirculation module 100 can only be operated in cleaning mode.

The command and control system of the second embodiment of the basting liquid recirculation module 100' is simplified in the absence of the pivoting recipient 10.

It is readily apparent to one skilled in the art that the basting liquid pumping circuit comprising a peristaltic pump 6 driven by an electric motor 3, a pipe assembly 80, including a hose 88 specific to peristaltic pump; the means for detecting the rupture of the hose of the peristaltic pump in the two variants 50, 50'; the mechanism 90 for inserting and removing the movable pipe 89 from the liquid recipient 5, and the drawer 68 of the liquid recipient 5 below which there is a heating plate 67, are common to both variants of the recirculation module 100, 100 '.

It is also easy to observe for a person skilled in the art that the recirculation module 100, 100' of a basting liquid and the vertical adapted rotisserie unit 200, can also be made in a monolithic construction, as well as that the recirculation module 100, 100 'of a basting liquid could be built on the right side of the unit 200; Obviously, in order to do this, the inclination of the collector 9 must be reversed, as well as other transpositions of left / right symmetry.

Also, the baster could be secured on hinges, as a door on its hinges, being mounted on the back side of the grill, in this way support wheels are no longer needed as the baster is now supported on the hinges. This construction is suitable when the weight of the recirculation module 100, 100' relative to the weight of the vertical rotisserie unit 200, is considerable lighter.

The drawer can be manually operated by means of handle 69 or by means of a motor engaging the slider arms 114 of the drawer 68 to open and close it by means of electronic command. For instance, with the help of a linear actuator (or other motor in that regard), here not shown. This assures that the opening and closing thereof happens in controlled fashion, herewith avoiding the brusque movement of the liquid positioned in the container. For example, the slider tube 49 of linear actuator is set as such to move with a velocity of 2cm/sec.

The drainpipe circuit consist of wash liquid collector and transfer tray 15 in the upper part of the baster, positioned just under the top gutter 30 and mechanically mounted against a reinforcing plate 94, a drain hose 18, and a short metal drainpipe 17 positioned above the container 5.

The drainpipe 17 consists in several sections following a broken line in space, with at least two bends, depending on the spatial configuration from the recirculation module 100 (taking into consideration the other constitutive elements), having its outlet 17a (located in the central part 100c of module 100) just above the container 5,

The drainpipe 16 is a metal pipe mechanically mounted to a support (here not shown) that is also mechanically mounted against a reinforced back panel 60c

## Claims

1. Basting liquid recirculation module (100) for an adopted vertical rotisserie unit (200), making together a vertical rotisserie machine, said rotisserie unit (200) having the upper part, above the highest spike with products to be roasted, equipped with a liquid distributor (7) and the bottom part, beneath the lowest spike with products to be roasted, equipped with a removable liquid collector (9) for collecting the liquid falling from the roasted products, the liquid recirculation module (100) comprising: in the lower part (100a) of the liquid recirculation module (100), a support plate (60a), on two pairs of wheels (58, 65) for moving the liquid recirculation module (100), a drawer (68) without bottom plate, having inside a liquid reservoir (5), in the form of an elongated rectangular box, open at the top, initially filled with basting liquid, and in which the liquid drains from the liquid collector (9) that is inclined towards the liquid reservoir (5) sitting on a heated plate (67), a removable liquid recipient (10), locate in the upper part (100b) of the recirculating unit (100) from which the received liquid gets into distributor (7) from the vertical rotisserie unit (200), and a means of transporting the liquid from the liquid reservoir (5) into the removable liquid recipient (10), **characterized by** the fact that
said means of transporting the liquid is a liquid pumping circuit comprising a peristaltic pump (6) with electric motor (3) located in a central part (100c), a pump pipe assembly (80) including a hose (88) specific to the peristaltic pump, the pump pipe assembly (80) connecting the removable reservoir (5) to the upper removable liquid recipient (10) to ensure the liquid transfer, said means of transporting being also provided with a tube insertion mechanism (90) for inserting or removing a mobile pipe (89) of the pump pipe assembly (80) in/from reservoir (5), depending on the closed or open position of the drawer (68), respectively,
said liquid reservoir (5) preferably also removable, being provided with a liquid homogenization assembly (70) for homogenizing of the liquid existed in it,
said removable liquid recipient (10) being a pivoting recipient tilting on a pivot axle (98), at time moments being determined by the liquid level in the pivoting recipient (10),
for the simultaneous transfer of the entire quantity of liquid pumped between two consecutive tipping moments by said pumping circuit, into a removable top gutter (30) which is passing through two corresponding slit from the adjacent side walls of the upper part (100b) and of the adapted vertical rotisserie unit 200, being placed to rest on the distributor 7, so that it evenly pours liquid on the products to be roasted along the entire length of spikes 43,
and that the liquid recirculation module (100) comprising also
an action bar assembly (40) driving the liquid homogenization assembly (70) in the liquid reservoir (5) and pivoting recipient (10) for pivoting it in the purpose of transferring liquid to the top gutter 30, said action bar assembly (40) being located in the central part (100c) of the liquid recirculation module (100), said three parts (100a ,100c, 100b) of the liquid recirculation module (100) having a common reinforced back panel (60c) on which said action bar assembly (40) being mounted, said back panel (60c) being mounted on the support plate (60a) of the bottom part (100a) and having side walls coming into contact with the rotisserie unit in the same plane, so that the recirculating unit (100) could be attached to the adapted vertical rotisserie unit (200), and
a command and control system of the operating conditions of the liquid recirculation module (100), which uses sensors to check the working position of the drawer (68), of the pivoting recipient (10) and of the top gutter (30) as well as the liquid level inside the liquid reservoir (5) and inside the pivoting recipient (10), ordering the operation of the peristaltic pump (6) and action bar assembly (40).

2. Basting liquid recirculation module as in claim 1, wherein the pump pipe assembly (80) for transporting the flavouring and tenderizing liquid from the liquid reservoir (5) to the pivoting recipient (10) comprising:
a stationary pipe (85), having a vertical orientation, consisting of several sections so to have the outlet (83) positioned above the pivoting recipient (10) and the bottom end - inlet (87) provided with hose connection means, above peristaltic pump (6) or one lateral side of it,
a movable pipe (89) having, in normal operation situation, also a vertical orientation, the upper end (91) of the movable pipe (outlet) being provided with hose connection means, being located underneath the peristaltic pump (6) or on its side opposite to that in which the lower end of the fixed pipe (85) is located, and the lower end (89a) of the movable pipe being located in the liquid reservoir (5), said movable pipe (89) being driven by an insertion mechanism (90) for the purpose of inserting or extracting the lower end (89a) of the movable pipe (89) from reservoir (5),
the bottom end (87) of the stationary pipe (85) being connected to the upper end (91) of the movable pipe (89) by means of the hose (88) specific to pumping circuits with peristaltic pumps having a section (88') lying inside of chamber (4) of the peristaltic pump (6), and the ends guided by some means (50, 50') for detecting of possible liquid losses due to rupture of hose 88 which may occur.

3. Basting liquid recirculation module as in claim 1, wherein the liquid homogenization assembly (70) from the liquid reservoir (5), being it-self a detachable one, comprises:
a plate (71), having a rectangular shape, similar to the bottom plate of the liquid reservoir (5) but smaller dimensions so that it may be immersed in reservoir (5), the mentioned plate (71) being equipped also with a round cutting (71b) having the diameter twice the outer diameter of the movable pipe (89), said cutting being used for inserting/extracting the bottom end (89a) of the movable pipe (89), in/from reservoir (5);
an axis (79) fixed at one end of the homogenizer plate (71), in two ears (74) thereof, on which the plate (71) can pivot when this axle (79) is articulated in a support (118) of the pivot axis, fixed on the lower plate (117) of the reservoir (5); and
a flat drive arm (72), perpendicular to the plate, mounted on the homogenizer plate (71) at the opposite end to said axel (79), said arm (72) ending with a flat finger (72a), through which the homogenization assembly (70) is connected to the action bar assembly (40) and
wherein the homogenizer plate (71) of the liquid homogenization assembly (70) of the reservoir (5) has a rectangular form, being provided with:
two long sides (78) bent in upward direction, forming an angle of approximately 90 degrees, to guide the flow of the liquid in reservoir (5),
in the direction opposed to pivot axle (79), an inclined wing (76) on the upper surface of the plate, resulting from a U-shape elongated cut in the homogenizer plate (71), followed by a bent in upward direction, clockwise forming an angle around 15 degrees, resulting in a slit (71a), so that the liquid from reservoir (5) flows through the mentioned slit (71a) created during the downwards pivoting movement of the homogenization plate (71), due to the inclination of the wing (76), being forced to flow on the upper surface of the homogenizer plate (71), being also guided by the guiding sides (78), and
at the end corresponding to the drive arm (72), the rear end of the homogenization plate (71), the orifice (71b) through which the lower end of the pump pipe assembly (80) enters the reservoir (5), an extension (73) having the role of a spacer, and
two L-shaped side spacers (75), positioned opposite to each other across the width of the plate (71), the width (75k) of each L-shaped spacer (75) corresponds to or being smaller than half the distance between width of reservoir (5) and width of the homogenization plate (71).

4. Basting recirculation module as in claim 1, wherein the pivoting recipient (10), located in the upper part of the liquid recirculation module (100), preferable detachable, has the form of an elongated rectangular box, opened both at upper part as well as in the front - towards the top gutter (30), in which the basting liquid is poured, the two side walls (131, 131') having rounded front ends, the base plate (137) of the pivoting recipient (10) continues with an inclined extension (133), which avoids dripping during the process of pouring the flavouring and tenderizing liquid from the pivoting recipient (10) into the inlet chamber (32) of the removable top gutter (30), each of two side walls (131, 131') having towards the frontal end, a circular hole (120, 120') having the centres on the pivot axis, said holes being provided with a slit for passing a locking pin (93) fixed on the pivot axle (98), to allow the pivoting recipient (10) to tilt on the axle (98),
and wherein said *pivot axle* (98) being equipped, at its free end, with a locking pin (93), and the mentioned axle (98) has at the end opposite to locking pin (93) a cylindrical extension (152) with guidance role, fastened in an reinforced lateral plate (94), mechanically fixed perpendicularly to the reinforced rear panel (60c), in the upper part (100b) of the liquid recirculation module (100), a guide ring (121) ensures that the pivot axle (98) is positioned and held perpendicular to the rear panel (60c) of the recirculating unit (100), when fixed in the liquid recirculation module (100), said pivoting recipient (10), also removable, being able to slide along the pivot axle (98) until a lateral wall (131) of the pivoting recipient (10) being blocked by a sliding stroke limiter (99) fixed to/ located on the pivot axle (98).

5. Basting liquid recirculation module as in claim 4, wherein the pivoting recipient (10) is provided with a separation wall (11), positioned between the two lateral walls (131 and 131') of the pivoting recipient (10), perpendicular to them, being aligned parallel to the back wall (23) of the pivoting recipient (10) or, preferably, inclined between 5 and 25 degrees from the vertical towards back wall (23), the distance between separation wall (11) and back wall (23) being about one third of the total length of the base plate (137) of pivoting recipient (10), said separation wall (11) not touching the inside of the base plate (137), divides the pivoting recipient (10) into two communicating liquid compartments: the part of pivoting recipient (10), between lip (133) of base plate (137) and partition wall (11) being a liquid supply and discharge compartment, located below the outlet (83) of the stationary pipe (85) of the pipe assembly (80), the other part of the pivoting recipient (10), between the partition wall (11) and the rear wall (23) being a liquid level reading compartment in the pivoting recipient (10), being located under a liquid level sensor (57) positioned on a support (56) mounted on the reinforced side plate (94).

6. Basting liquid recirculation module as in claim 1, wherein the top gutter (30), preferably detachable, is an elongated rectangular shape, having at one end a liquid receiving chamber (32) formed between two side walls (146, 146'), a rear wall (148) and a partial front wall (147) fixed on an elongated base plate (29) for draining purpose, ending in an outlet area (35) representing the other end of the top gutter (30), said partial front wall (147) having a bent portion (31) towards the outlet area (35), parallel to elongate bottom plate forming together the outlet (32') of said chamber (32), said elongated base plate (29) including outlet area (35) of the gutter (30) being provided with lateral liquid guiding edges (33, 33'),
each of said wall (146', 147, 148) of the liquid receiving chamber (32), which does not get into direct contact with the pivoting recipient (10) when tilting it, having a lip (149) at the upper part said lip being outwardly inclined to prevent liquid spilling during its transfer from the pivoting recipient (10) to the inlet of the liquid receiving chamber (32), and said rear wall (147) of the top gutter (30) being provided with two hooks (34) to be fixed on a support (24) of the top gutter (30), while the outlet area (35) of the top gutter (30), passes through two corresponding slit from the adjacent side walls of the upper part (100b), and of the adapted vertical rotisserie unit (200), being placed to rest on the distributor (7) of the adapted vertical rotisserie unit (200).

7. Basting liquid recirculation module as in claim 1, wherein the action bar assembly (40) comprises a linear actuator (96) with a DC motor said actuator (96) having a restricted adjustable stroke and being fixed on - and parallelly aligned to the reinforced back wall (60c) of the liquid recirculation module (100) by means of a mechanical support (52), so that the slide tube (49) of the linear actuator (96) to be in vertical position,
an action bar (45) having three sections: two parallel aligned vertical orientated sections one lower action bar (51) and another upper action bar (39), being located in the slits of some support-clamps (38) fixed on reinforced back wall (60c), and one horizontal section (47) between them, as drive strip (47), which is fixed at the end of the slide tube 49 of a linear actuator 96,
the lower action bar (51) driving the liquid homogenization assembly (70), the lower action bar (51) having the lower end (53) provided with a slit (55a) in which may enter the flat finger (72a) of the arm (72) of the homogenizer plate (71),
the upper bar (39) having at the upper end a small wheel (37) which comes into contact with the lower plate (137) of the pivoting recipient (10), driving it for tilting said pivoting recipient (10) toward top gutter (8),
the action bar (45) may move up and down, on a suitable preestablished stroke /distance, where it is driven by the slide tube (49) of the linear actuator (96).

8. Basting liquid recirculation module as in claim 1, wherein, for the purpose of cleaning the pipe assembly (80) of the pump circuit within the liquid recirculation module (100), in a washing mode where the liquid container (5) being filed with a washing liquid instead of basting liquid and said pivoting recipient (10) being removed, the liquid recirculation module (100) further comprises a drain pipe circuit comprising a wash liquid collector and transfer tray (15), located, as pivoting recipient (10) is removed, under said outlet (83) of said pump pipe assembly (80), a drain hose (18) mounted in quasi vertical position, and a short drainpipe (17) with vertical orientation, said drainpipe (17) being mechanically mounted by means of a support (22) to the reinforced back panel (60c) of the recirculation module (100) and having an outlet (17a) for wash liquid at its bottom end located, when the drawer (68) is closed, above the liquid container (5) and a frustoconical fitting (17b) at its upper end, to be attached to lower end (18b) of the drain hose (18) on it, the upper end of said drain hose (18) being connected to an outlet pipe (15b) of the said wash liquid collector and transfer tray (15).

9. Basting liquid recirculation module as in claim 1, wherein the liquid recirculation module (100) is further provided with some rupture detection means (50, 50') of the hose (88) on the segment (88') positioned inside the pump's chamber (4), the mentioned rupture detection means (50, 50') comprising a cylindrical guide 143 or two such cylindrical guides (144, 144') for guiding and changing direction of the ends of the hose (88) before entering the chamber (4) of the peristaltic pump (6), the guide pipe(s) being positioned underneath the chamber of the peristaltic pump is/are equipped with means intended to ensure that the hose (88) does not slide from the guide pipe(s); an inclined hose rupture detection gutter (95) for detecting rupture of the hose (88) in the portion (88') of the pump's chamber (4), as the surface of the mentioned gutter (95) covers the area located underneath the peristaltic pump (6), for collecting the liquid loss, the length of the gutter (95) exceeds the distance between an orifice (27) corresponding to this gutter, located on a panel (156) of the front door of the central part (100c), and the total length of the peristaltic pump (6), so that any fluid leaking from the hose to be visible by an operator and to fall through a removable intermediary gutter (26) located on an upper panel (60b) of the lower part (100a), back to the reservoir (5).

10. Basting liquid recirculation module as in claim 1, wherein the tube insertion mechanism (90) for the movable pipe (89) having the purpose of inserting or removing the mobile pipe (89) in/from reservoir (5) with liquid, being driven by the closing or opening of the drawer (68) in the lower part (100a) holding the reservoir (5) comprises
a pivotable insertion arm (207) in a shape that can be associated with the letter V, having at on side/end (207a) mounted the movable pipe (89), and the other side/end (207b) being for driving the insertion mechanism (90') of the movable pipe (89), coming into contact with the rear wall (116) of the container (5) located in the drawer (68); said insert arm (207) being pivotable relative to an axle (208) mounted on a vertical support plate (209) being fixed to the reinforced rear panel (60c); a helical spring (125) being attached with the upper end (125a) to the rear of the pivoting insert arm (207) and with the lower end (125b) at a point located vertically passing through the pivot axis (208).

11. Basting liquid recirculation module as in claim 1, wherein, the command and control system is designed to ensure the operating conditions of the liquid recirculation module (100), avoiding accidents during use, both in the actual operating state and in the washing state, being equipped with some sensors including :
a position sensor (105) placed on the hook support (24) of the top gutter (30), checking if the upper lateral door (157) of the liquid recirculation module (100) is closed; in case of a negative reading, the pump cannot be activated or stops, if operated;
a position sensor (108) placed in the upper part of the liquid recirculation module (100) for checking if the top gutter (30) is in its place in the liquid recirculation module (100), in case of a negative reading, the pump cannot be activated or stops, if operated;
a position sensor (107) placed in the area of the drawer (68) of the liquid recirculation module (100), checking if the drawer (68) of reservoir (5) is closed, in case of a negative reading, the pump cannot be activated or stops, if operated;
a liquid level sensor (57) in the pivoting recipient (10) that not only reads the liquid level in the recipient (10), but also checks whether said pivoting recipient (10) is in its place in the liquid recirculation module (100), in case of negative reading, the pump cannot be activated or will stop in its action, if operated;
a liquid level sensor (106) for the liquid in the removable liquid reservoir (5) is positioned right above this reservoir and reads the liquid levels in the container (5);
when the levels are too high or too low, the pump cannot be activated or the pumping action will be stopped, and in the absence of reservoir (5) in the drawer (68), the reading will be negative and the pump cannot be activated.
a sensor (57) positioned on a support (56) placed in the upper part (100b) of the liquid recirculation module (100) above the pivoting recipient (10), for reading the liquid level therein or the absence of said pivoting recipient (10), when liquid level corresponds with the programmed values then pumping stops, in case of a negative reading, which happens in the absence of the pivoting recipient (10), said recirculation module (100) can only be operated in cleaning mode; and
being implemented by a human-machine interface, operating commands being given by an operator using a touch screen (63) and an on/off button (64), located on the front door panel (156).

12. Basting liquid recirculation module (100') for an adopted vertical rotisserie unit the (200), making together a vertical rotisserie machine, said vertical rotisserie unit (200) having the upper part, above the highest spike with products to be roasted, equipped with a liquid distributor (7) and the bottom part, beneath the lowest spike with products to be roasted, equipped with a detachable liquid collector (9) for collecting the liquid drained from the roasted products, the liquid recirculation module (100') comprising:
in the inferior part (100'a) of the liquid recirculation module (100'), a support plate (60a), on two pairs of wheels (58, 65) for moving the liquid recirculation module (100'), with a drawer (68) without bottom plate, having inside a liquid reservoir (5), in the form of an elongated rectangular box, open at the top, initially filled with flavouring and tenderizing liquid, and collecting the liquid drained from the liquid collector (9) being inclined towards the liquid reservoir (5),
a removable liquid recipient, locate in the upper part (100'b) of the liquid recirculation module (100'), from which the received liquid gets into distributor (7) from the vertical rotisserie unit (200), and
a means of transporting the basting liquid from the liquid reservoir (5) directly to the removable recipient, located in the central part (100'c), located between the inferior part (100'a) and superior part (100'b), **characterized in that**
said removable liquid recipient is a removable top gutter (30') which directly transfers the basting liquid coming from means of transporting into distributor (7);
said means of transporting the liquid, comprising a peristaltic pump (6) with electric motor (3), said pump having a volumetric flow rate ensuring the necessary amount of liquid in the distributor (7) so that the basting liquid falls equally on the products to be roasted along the entire length of the spikes (43), at certain pre-established time intervals, a pump pipe assembly (80) including a hose (88) specific to the peristaltic pump connecting directly the removable reservoir (5) with the top gutter (30'), said means of transporting being also provided with a tube insertion mechanism (90) for inserting or removing a mobile pipe (89) of the pump pipe assembly (80) in/from reservoir (5), depending on the closed or open position of the drawer (68), respectively,
the liquid reservoir (5) being equipped with a liquid homogenization assembly (70) for homogenization of the liquid for the liquid in it, preferable also removable;
said central part (100'c), being divided by a reinforced middle panel (60d) in a front part, which communicates directly with the upper part (100'b) and the lower part (100'a), of the liquid recirculation module (100'), and another back part comprising
an action bar assembly (40'), driving said liquid homogenization assembly (70'); and
a command and control system of the operating conditions of the liquid recirculation module (100'), which uses sensors to check the working position of the drawer (68), and of the top gutter (30') as well as the liquid level inside the liquid reservoir (5), ordering the operation of the peristaltic pump (6) and action bar assembly (40'), and
said central part (100'c) being in a parallelepiped-rectangular form, having the same dimensions as the base of bottom part (100'a) and upper part (100'b) of the liquid recirculation module (100') and being located between them, said three parts (100'a ,100'c, 100'b) of the liquid recirculation module (100') having a common reinforced back panel (60c) on which said action bar assembly (40') is mounted, said back panel (60c) being mounted on the support plate (60a) of the bottom part (100'a), so that the entire recirculation module (100') has the shape of a parallelepiped-rectangular column.

13. Basting liquid recirculation module as in claim 12, wherein the top gutter (30'), preferably detachable, is an elongated rectangular shape, having at one end a liquid receiving chamber (32) formed between two side walls (146, 146'), a rear wall (148) and a partial front wall (147) fixed on an elongated base plate (29) for draining purpose, ending in an outlet area (35) representing the other end of the top gutter (30'), said partial front wall (147) having a bent portion (31) towards the outlet area (35), parallel to elongate bottom plate so that forming together the outlet (32') of said chamber (32), said elongated base plate (29) including outlet area (35) of the gutter (30) being provided with lateral liquid guiding edges (33, 33'),
each of said wall (146, 146', 147, 148) of the liquid receiving chamber (32) having a lip (149) at the upper part said lip being outwardly inclined to prevent liquid spilling during dropping from the outlet (83) of the pump pipe assembly (80) to the inlet of the liquid receiving chamber (32), and
said rear wall (147) of the top gutter (30') being provided with two hooks (34) to be fixed on a support (24) of the top gutter (30), while the outlet area (35) of the top gutter (30'), passes through two corresponding slit from the adjacent side walls of the upper part (100'b), and of the adapted vertical rotisserie unit (200), being placed to rest on the distributor (7) of the adapted vertical rotisserie unit (200).

14. Basting liquid recirculation module as in claim 12, wherein the action bar assembly (40') comprises
a linear actuator (96) with a DC motor said actuator (96) having a restricted adjustable stroke and being fixed on - and parallelly aligned to the reinforced back wall (60c) of the liquid recirculation module (100) by means of a mechanical support (52), so that the slide tube (49) of the linear actuator (96) to be in vertical position,
an action bar (45') having two sections: one lower action bar (51) vertical orientated being located in the slits of some support-clamps (38) fixed on reinforced back wall (60c), and one horizontal section (47) at upper end of the lower action bar (51), as drive strip (47), being fixed at the end of the slide tube 49 of a linear actuator 96,
the lower action bar (51) driving the liquid homogenization assembly (70), the lower action bar (51) having the lower end (53) in form of an elbow a strip/plate (55) provided with a slit (55a) in which may enter a flat finger (72a) of the arm (72) of the homogenizer plate (71),
the action bar (45') may move up and down, on a suitable pre-established stroke /distance, where it is driven by the slide tube (49) of the linear actuator (96).

15. Basting liquid recirculation module as in claim 12, wherein, for the purpose of cleaning of the pipe assembly (80) in a washing mode of the pump circuit within the liquid recirculation module (100'), the liquid container (5) being filed with a washing liquid instead of basting liquid, said top gutter (30') being removed and, the liquid recirculation module (100') further comprises a drain pipe circuit comprising a wash liquid collector and transfer tray (15) located under said liquid receiving chamber (32) of the top gutter (30') to collect washing liquid from the outlet (83) of said pump pipe assembly (80), as said top gutter (30') being removed and an elongated quasi vertical orientated drain tube (151) being mechanically mounted by means of a support (22') to the reinforced middle panel (60d) of the recirculation module (100'), for guiding the wash/cleaning liquid from the pump pipe assembly (80), after the cleaning liquid has passed through the pump pipe assembly (80), back to the container (5) so that the washing liquid flows down on the walls of the drain tube (151) located in said front part of the central part (100'c), said drain tube (151) having its upper end connected to an outlet pipe (15b) of the said wash liquid collector and transfer tray (15) and having its lower end above the liquid container (5).
